# EUROPÄISCHE PATENTSCHRIFT

(11) **EP 2 951 457 B1**
(45) Veröffentlichungstag und Bekanntmachung des Hinweises auf die Patenterteilung: **25.01.2017**
(21) Anmeldenummer: 14704305.3
(22) Anmeldetag: 30.01.2014
(51) Int. Cl.: F16D 65/097

(54) **REIBBELAG MIT EINER STAHLDRAHTBÜGELFEDER**
FRICTION LINING WITH A STEEL WIRE BOW SPRING
GARNITURE DE FRICTION POURVUE D'UN ÉTRIER RESSORT EN FIL D'ACIER

(30) Priorität: 31.01.2013 DE 102013201646; 21.08.2013 DE 102013216592
(43) Veröffentlichungstag der Anmeldung: 09.12.2015
(73) Patentinhaber: Continental Teves AG&Co. Ohg, 60488 Frankfurt (DE)
(72) Erfinder: SANDER, Christoph, 1030 Wien (AT); PIEHLER, Christian, 60488 Frankfurt (DE); RAUSCH, Jochem, 55270 Essenheim (DE)
(86) Internationale Anmeldenummer: PCT/EP2014/051770
(87) Internationale Veröffentlichungsnummer: WO 2014/118260

(56) Entgegenhaltungen:
- DE-A1- 4 303 961
- DE-A1- 10 019 654
- DE-A1- 10 333 420

## Beschreibung

Die Erfindung betrifft einen Reibbelag mit einer Stahldrahtbügelfeder, die mit Federschenkeln zur radial elastischen Abstützung des Reibbelags an einer Gehäusebrücke eines Bremssattels dient, wobei die Feder an einer Rückenplatte des Reibbelags befestigt ist, und wobei die Rückenplatte weiterhin eine Aufnahme für einen Reibbelag-Verschleißsensor zur Verschleißerfassung bei einer Teilbelag-Scheibenbremse aufweist, nach den Merkmalen vom Oberbegriff vom Patentanspruch 1. Ein gattungsgemäßer Reibbelag mit Drahtbügelfeder ist aus der DE 43 03 961 A1 bekannt und zur Verliersicherung so gestaltet ist, dass ein Verbindungsabschnitt der Drahtfeder den Verschleißsensor radial übergreift und festlegt.

Aus der DE 100 19 654 A1 ist eine Scheibenbremse mit einem Bremssattel bekannt, der die Bremsscheibe von radial innen in Richtung nach radial außen umgreift, und einen Reibbelag-Verschleißsensor sowie eine, aus Draht gewickelte, Formfeder zur Radialbefederung vom Bremsbelag aufweist. Dabei ist die Formfeder so an dem Bremssattel abgestützt, dass der Reibbelag nach radial innen gedrückt gehalten wird. Die Formfeder ist radial oberhalb vom Reibbelag angeordnet, nimmt vergleichsweise viel Raum ein, reduziert den nutzbaren Bremsscheibendurchmesser und behindert auch eine zentrale, nach radial innen gerichtete, Montage von dem Reibblag-Verschleißsensor. Dies wird als nachteilig angesehen, weil die Konstruktion sowohl Montage als auch Wartung verkompliziert. Der maximal nutzbare Bremscheibendurchmesser ist reduziert. Zudem weist die bekannte Formfeder eine korrosiv ungünstige Platzierung auf.

Weiterhin sind Reibbeläge mit Radialbefederung bekannt, bei denen ein Bruch eines Federschenkels dazu führt, dass die Federfunktion verloren geht.

Es ist daher eine Aufgabe der vorliegenden Erfindung, die Mängel vom Stand der Technik abzustellen und eine bauraumsparende Befederung für ein modernes Scheibenbremssystem vorzulegen, das weiterhin eine einfache und raumsparende Integration von einem Reibbelag-Verschleißsensor erlaubt, und wobei zudem eine erleichterte Montage der Komponenten ermöglicht ist.

Die Aufgabe wird durch integriert verdichtete Bauweise nach den Merkmalen vom Kennzeichen des Patenanspruchs 1 gelöst, indem die Drahtbügelfeder einen zentralen U-Bügel zur Abstützung an der Rückenplatte und zur Aufnahme von dem Reibbelag-Verschleißsensor aufweist, und wobei der U-Bügel derart oben offen ausgebildet ist, dass der Reibbelag-Verschleißs ensor in dem zentralen U-Bügel integriert aufgenommen ist, und wobei der U-Bügel im Wesentlichen größer als der Reibbelag-Verschleißsensor vorgesehen ist, so dass der Reibbelag-Verschleißsensor in Radialrichtung in einer Aufnahme der Rückenplatte montierbar ist. Ein besonderer Vorteil der Erfindung besteht darin, dass die korrekte, lagerichtige Montage der beteiligten Komponenten aneinander gewissermaßen automatisch erhalten wird, weil eine lageunrichtige Montage konstruktiv ausgeschlossen ist.

Im Kern besteht die Erfindung also auf dem Grundgedanken, dass die besagte Stahldrahtfeder gewissermaßen als Verbindungs-, Zwischen- oder Brückenglied zwischen Rückenplatte und Reibbelag-Verschleißsensor eingefügt sowie an der Rückenplatte befestigt ist, und wobei die Drahtfeder ähnlich der Rückenplatte eine Aufnahme für den Reibbelag-Verschleißsensor aufweist. Ein zusätzlicher Vorteil der Erfindung besteht darin, dass Reibbelag, Feder und Reibbelag-Verschleißsensor besonders günstig und dennoch abgestimmt von den jeweiligen Komponentenherstellern bereitgestellt sowie fehlerfrei zur Montage im System zugeführt werden können. Gesonderte Befestigungsmittel, wie insbesondere Stifte, Niete oder Schrauben, sind zwischen Feder, Rückenplatte und Sensor weder erforderlich noch wirksam, weil die Mittel zur Bewirkung einer Haltefunktion in die jeweiligen beteiligten Komponenten integriert sind. Durch räumliche Integration (insbes. gegenseitige räumliche Überlappung der beteiligten Komponenten in der Radialrichtung) wird eine besonders raumsparende Konstruktion vorgeschlagen, durch die es die Erfindung im Bremssystem ermöglicht, besonders große Bremsscheibendurchmesser vorzusehen. In diesem Zusammenhang ist die Montagerichtung für den Verschleißsensor als auch die Montagerichtung für die Drahtfeder in Relation zu der Rückenplatte jeweils einheitlich radial gerichtet in Bezug zu der Rückenplatte ausgerichtet. Selbst wenn einer der Federschenkel der Drahtbügelfeder aus irgendwelchen Gründen brechen sollte, erfüllt der andere Federschenkel weiterhin die gewünschte Federwirkung (redundante Federwirkung).

Eine besonders einfache und automatengerechte Biegeumformung der Drahtbügelfeder unter stabiler Abstützung an der Rückenplatte wird erhalten, wenn ein zentraler elastischer U-Bügel mit einem U-Boden und mit zwei davon abgehenden U-Schenkeln vorgesehen ist und wobei an jeden U-Bügel je ein elastischer Federschenkel zur radial federnden Anlage an der Gehäusebrücke vorgesehen ist.

Die elastische Dauerhaltbarkeit der Drahtbügelfeder wird weiter verbessert, indem jedem Federschenkel vom Stahldrahtbügel eine eigene Federwicklung zugeordnet ist, und wobei der Drehsinn der Federwicklungen jeweils zueinander unterschiedlich, also umgekehrt, vorgesehen ist.

Für einen kerbwirkungsfreien Spannungsverlauf ist vorgesehen, dass der Stahldrahtbügel jeweils zwischen Federwicklung und U-Schenkel eine S-förmige Krümmung aufweist. Die Abstützung der Drahtbügelfeder wird weiterhin verbessert, wenn die S-förmige Krümmung zumindest teilweise an einen gekrümmten Sitz von der Rückenplatte angeschmiegt ist, oder auf dem Sitz aufliegt.

Vorteilhafterweise ist eine axial gerichtete Steigung der Federwicklungen so dimensioniert, dass benachbarte Wicklungsabschnitte ohne Anlage aneinander mit axialem Abstand zueinander vorgesehen sind. Die Rückenplatte kann mit Sitzen zur Aufnahme der Federwicklungen versehen sein, welche seitlich neben der Aufnahme für den Reibbelag-Verschleißsensor platziert sind. Im Bereich dieser Sitze ist die Rückenplatte mit einer Dicke versehen, welche geringfügig größer als der axiale Abstand zwischen benachbarten Wicklungsabschnitten dimensioniert ist. Dadurch wird es gewissermaßen ermöglicht, die Drahtbügelfeder anhand ihrer Wicklungen elastisch, also lösbar, auf die Sitze von der Rückenplatte aufzuspannen.

Zur Bauraumeinsparung wird empfohlen, dass die Steigung der Federwicklungen derart begrenzt dimensioniert ist, dass der Federbügel, in der Axialrichtung betrachtet, axial nicht über die Dicke der Rückenplatte übersteht. Demzufolge wird sicher ausgeschlossen, dass die Drahtbügelfeder selbst bei vollständig verschlissenem Reibwerkstoff, durchgeschliffen wird.

Der Federbügel weist gewissermaßen eine in mehreren "Ebenen" arrangierte, axial versetzte, Bauweise auf. Jeder grundsätzlich ebene U-Bügel grenzt dazu an die reibbelagfreie Rückseite von der Rückenplatte an. Die Federschenkel sind demgegenüber in einem Bereich der Rückenplatte platziert, der an die Reibbelagmasse angrenzt. Jede Wicklung verläuft mit einer Steigung in Axialrichtung, ist auf dem zugehörigen Sitz der Rückenplatte aufgespannt, und verbindet jeweils eine S-Krümmung mit jeweils einem Federschenkel. Zur verbesserten Abstützung kann jeder Sitz konkav oder konvex an Abschnitte der Drahtbügelfeder angepasst sein.

Weitere Einzelheiten der Erfindung gehen aus nachstehender Beschreibung anhand der Zeichnung hervor.

Eine Scheibenbremse vom Teilbelagtyp für Kraftfahrzeuge umfasst grundsätzlich einen nicht gezeigten Bremssattel, insbesondere Faustsattel mit wenigstens einem Aktuator (Kolben) der wenigstens einen Reibbelag 1 direkt zur Anlage an eine Bremsscheibe presst. Jeder Reibbelag umfasst dazu eine Rückenplatte 2 und einen verschleißbehafteten Reibwerkstoff 3. Zur mittelbaren Betätigung von einem zweiten, faustfingerseitigen Reibbelag dienen Reaktionskräfte, indem der Faustsattel in Scheibendrehrichtung fest aber parallel zu einer Raddrehachse, relativ zu einem fahrzeugfesten Halter, verschiebbar gelagert ist. In dem Halter sind die Reibbeläge 1,1b verdrehgesichert sowie axial verschiebbar aufgenommen. Eine andere mögliche Scheibenbremsbauform betrifft die Festsattelbremsen, bei denen beide Bremsbeläge unmittelbar direkt von wenigstens zwei gesonderten Aktuatoren (Kolben) eines Bremssattels beaufschlagt sind, und wobei der Bremssattel fahrzeugfest angeordnet ist. Beiden Bremssatteltypen ist grundsätzlich gemeinsam, dass jeweils beide Reibbeläge 1 in Radialrichtung R elastisch vorgespannt befedert sind, um zu vermeiden, dass Vibration zu Klappergeräuschen führt. Dabei kann die Radialbefederung jeweils zwischen Bremssattel - insbesondere einer Gehäusebrücke und dem Reibbelag 1,1b - so platziert sein, dass der Reibbelag 1,1b permanent elastisch nach radial innen gegen eine Auflage im Schacht vom Gehäuse, oder aber radial elastisch gegen ein zugeordnetes Halte- und Führungssystem im zugeordneten Halter, angelegt wird. Prinzipiell ist es aber auch möglich, lediglich einen der Reibbeläge 1 mit einer erfindungsgemäßen Drahtbügelfeder zu versehen, um den anderen Reibbelag mit anderen Mitteln zu federn.

Eine erfindungsgemäße Drahtbügelfeder 4 verfügt zu diesem Zweck über zwei redundante, im Wesentlichen zueinander diametral entgegengesetzt gerichtet abgebogene, endseitig frei auskragende, Federschenkel 5,6 zur radial federnden Anlage an einer Gehäusebrücke vom Bremssattel. Jedem der Federschenkel 5,6 ist eine eigene, schraubenförmige, sowie mit einer vorgegebenen Steigung P ausgeführte Federwicklung 7,8 vorgeschaltet, die wenigstens etwa eine vollständige Federwicklung ausführt und für die notwendige elastische Nachgiebigkeit sorgt. Diese nebeneinander vorgesehene Platzierung von zwei gesonderten Federwicklungen 7,8 ist in Radialrichtung bauraumsparend, weil der vergleichsweise klein ausführbare Wicklungsdurchmesser einen reduzierten Bauraumbedarf im Vergleich mit einer einzigen und vergleichsweise groß dimensionierten Wicklung verursacht.

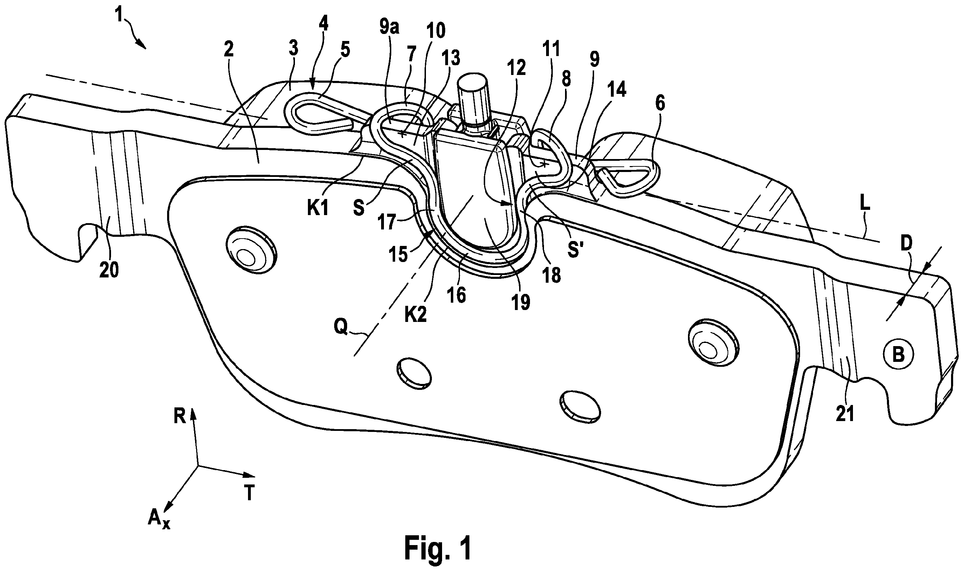

Ein weiterhin günstiger Bauraumbeitrag wird erzielt, indem zumindest ein großer Teil der nebeneinander platzierten Federwicklungen 7,8 gleichzeitig neben einem Nocken 9 der Rückenplatte 2, der oberhalb vom Reibwerkstoff 3 arrangiert ist, vorliegt. Diese Verdichtung begünstigt leistungsfähige Bremssysteme mit großen Bremsscheibendurchmessern. Eine Ausführung mit zusätzlichen Federwicklungen, oder Teilen davon, ist ebenfalls möglich. Bei der bevorzugten Ausführungsform (Fig. 1) weist eine links vom U-Bügel 15 angeschlossene Federwicklung 7 einen Drehsinn im Uhrzeigersinn nach rechts auf, während die rechts vom U-Bügel angeschlossene Federwicklung 8 einen Drehsinn gegen den Uhrzeigersinn nach links aufweist. Der Drehsinn der Federwicklungen 7,8 ist bei diesen Ausführungsformen der Erfindung in Bezug auf die Beanspruchung so angeordnet, dass die radial über den Federschenkel 5,6 eingeleitete Biegebeanspruchung im Betrieb zu einem Aufbiegen der Federwicklung 7,8 führt, also die Federbeanspruchung entgegen dem Drehsinn von der Federwicklung 7,8 gerichtet verläuft und die Federbestandteile zur Abstützung in den gebildeten Sitz 13,14 gedrückt werden. Die Federwicklung 7,8 wird also im Betrieb aufgebogen, mit anderen Worten geweitet. Dadurch ist eine radial elastische, freie Deformation der Federschenkel 5,6 in der Radialrichtung bei gleichzeitig geringem Bauraumbedarf für die Drahtbügelfeder sowie verbesserter Federabstützung ermöglicht. Obwohl vorstehend von einem U-Bügel gesprochen wird, ist es prinzipiell möglich, dessen Formgebung abzuwandeln und an Erfordernisse anzupassen.

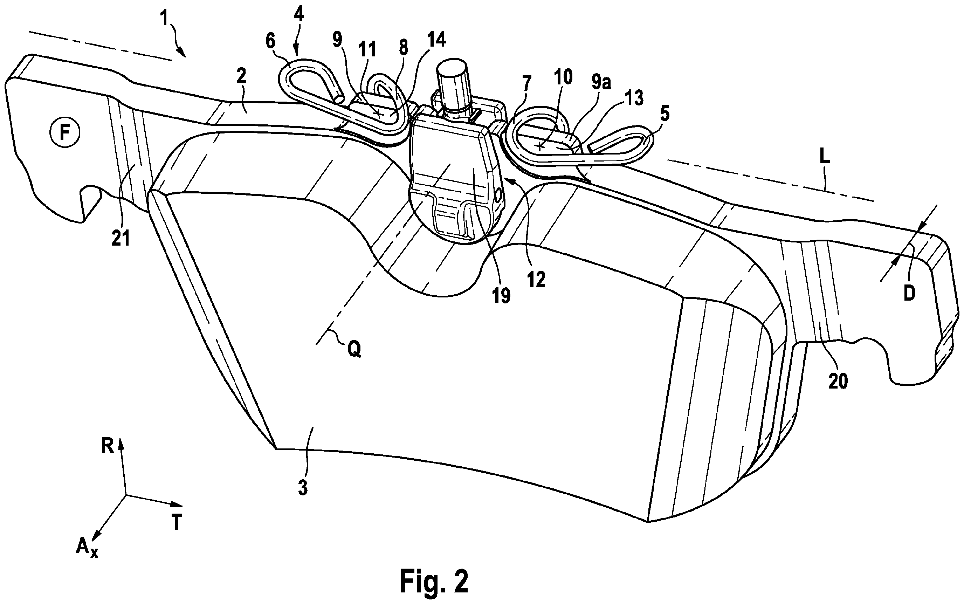

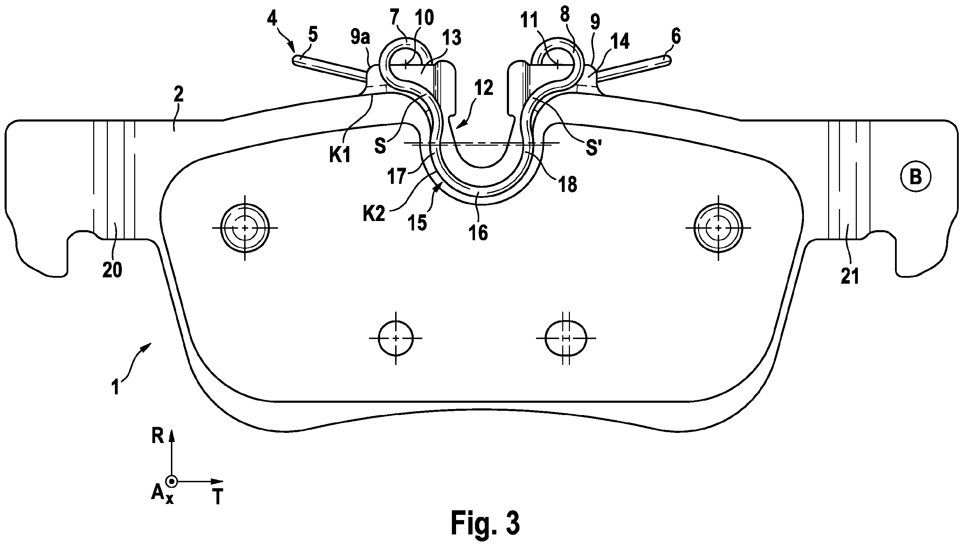

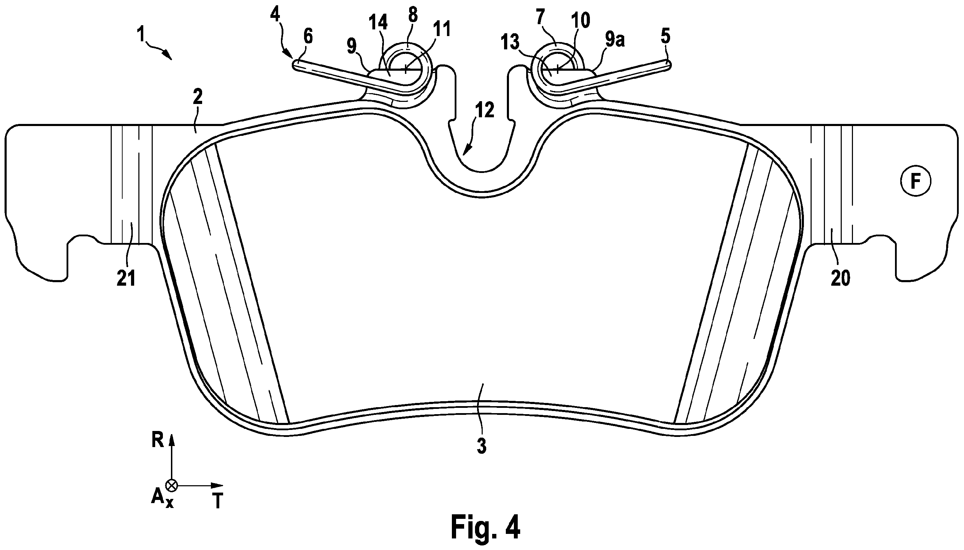

Bei der ersten Ausführungsform (siehe Fig. 2) ist jeder Federschenkel 5,6 in Bezug auf den Wicklungsmittelpunkt 10,11 nicht radial oben (12-Uhr-Position) sondern radial unten (6-Uhr-Position) abgezweigt vorgesehen. Die betriebsbedingte, radial gerichtete, elastische Deformation unter Aufbiegung der Federwicklung 7,8 verstärkt eine radiale Auf- und Anlage zwischen U-Schenkel 17,18 sowie (Sensor-)Aufnahme 12 an der Rückenplatte 2.

Die Federwicklung 7,8 kann zusätzlich zu einer elastisch klemmenden, sowie lösbaren, Befestigung der Drahtbügelfeder 4 am Befestigungsabschnitt der Rückenplatte 2 dienen. Die besondere, schraubenförmige Steigung P der Federwicklung 7,8 eröffnet dazu eine schlitzförmige Öffnung zum Einschieben von dem Nocken 9. Dadurch wird es ermöglicht, die Drahtbügelfeder 4 unter elastischer Deformation von Federwicklungsabschnitten derart radial gerichtet auf den plattenförmigen Nocken 9/Sitz der Rückenplatte 2 aufzuschieben, dass die Federwicklungsabschnitte jeder Federwicklung 7,8 den Nocken 9/Sitz 13,14 zwischen einander elastisch einspannen. Dazu ist die elastische Spannwirkung der Wicklungsabschnitte im Wesentlichen axial, also parallel zu einer Bremsscheibendrehachse, gerichtet vorgesehen. Also kann jede der Federwicklungen 7,8 eine Doppelfunktion erfüllen, indem gleichzeitig die Befestigungs-/Haltefunktion ermöglicht wird, als auch die notwendige radiale Elastizität von dem jeweiligen Federschenkel 5,6 bewirkt wird.

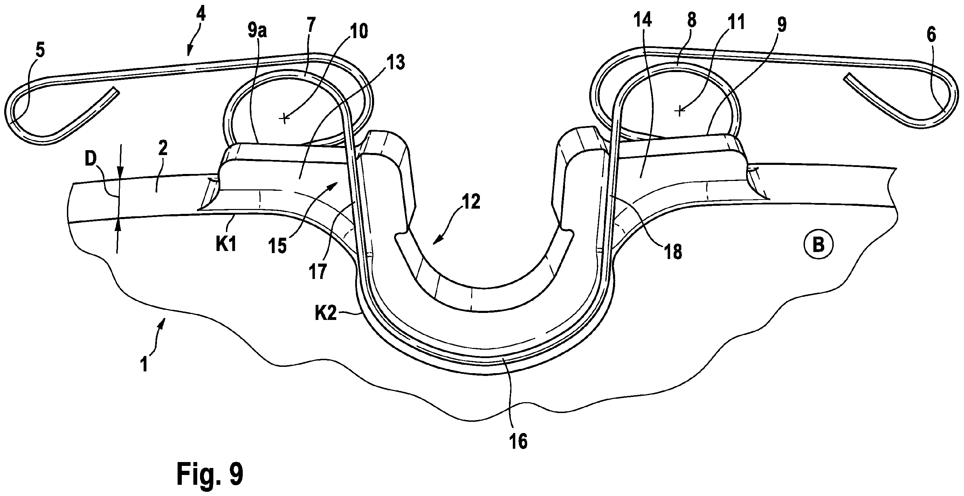

Eine andere Ausführungsform der Drahtbügelfeder 4 (Fig. 9) ermöglicht eine Gestaltung der links vom U-Schenkel 17 platzierten Federwicklung 7 - ausgehend von dem U-Bügel 15 - gegen den Uhrzeigersinn, also in Drehrichtung nach links. Dementsprechend ist die rechts vom U-Schenkel 18 platzierte Federwicklung 8 nach rechts gewunden vorgesehen. Durch diese Konstruktion wird es ermöglicht, dass der Federbügel in der 12-Uhr-Position an die Wicklung anschließt und wobei die Federwicklungen 7,8 unter der elastischen Federbeanspruchung der Federschenkel 5,6 gewissermaßen "zu" gebogen werden. Dabei ist ein Großteil der Federwicklung 7,8 auf der Seite vom Reibwerkstoff 3 angeordnet.

Die Rückenplatte 2 weist prinzipiell eine nominell vorgegebene Blechdicke (Nennblechdicke) auf, die insbesondere im Bereich von tangential gerichteten, hammerkopfartigen Vorsprüngen 20,21 der Rückenplatte 2 in Dickenrichtung umgeformt, aufgedickt, ausgebildet sein kann, um eine erhöhte Festigkeit durch irgendein Mehrfaches der nominellen Blechdicke (sowie durch Kaltverfestigung) zu erzielen. Für die verbesserte Montage der Drahtbügelfeder 4 an der Rückenplatte 2 ist es jedoch sinnvoll, wenn jeder Nocken 9,9a/Sitz 13,14 eine anteilig gegenüber der Blechdicke D reduzierte, also abgestreckte, Dicke aufweist. Prinzipiell ist es weiterhin möglich, jeden Sitz 13,14 mit zusätzlichen Mitteln, wie insbesondere mit Einführschrägen für eine vereinfachte Montage, und/oder mit zusätzlichen Sicherungs- oder Haltemitteln zu versehen, die eine unerwünschte Lösebewegung zwischen Drahtbügelfeder 4 und Rückenplatte 2 vermeiden können. Dazu können Nocken, keilförmige Vorsprünge, Hinterschneidungen und oder andere Profilierungen sowie Kombinationen davon auf der Oberfläche vom Haltevorsprung aufweisen.

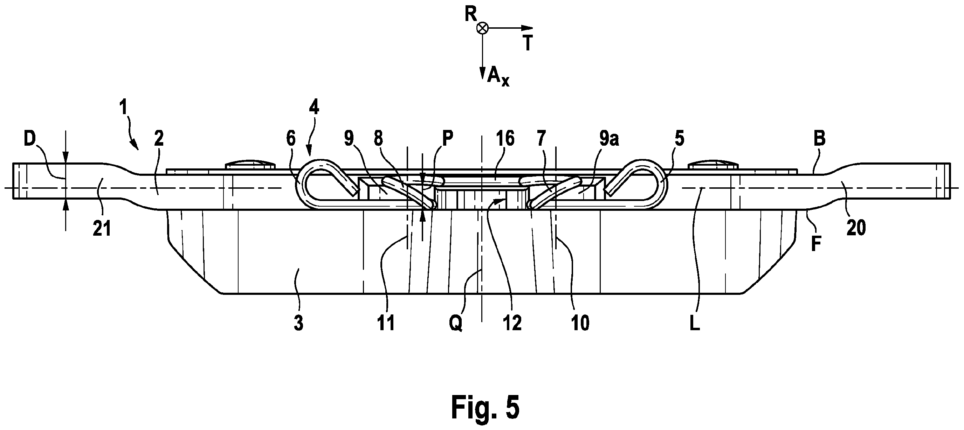

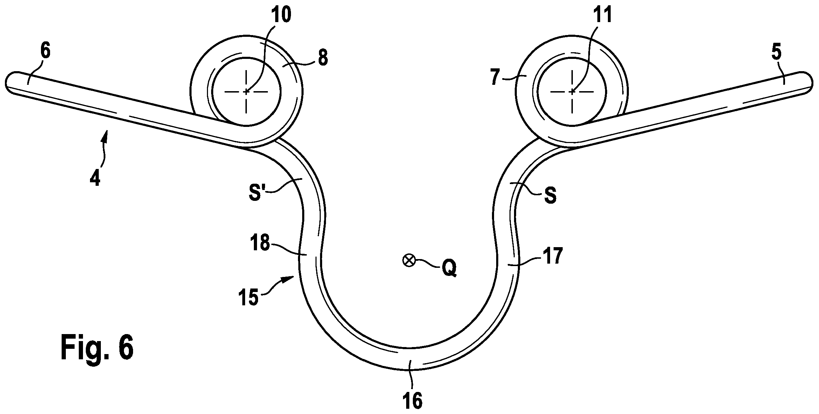

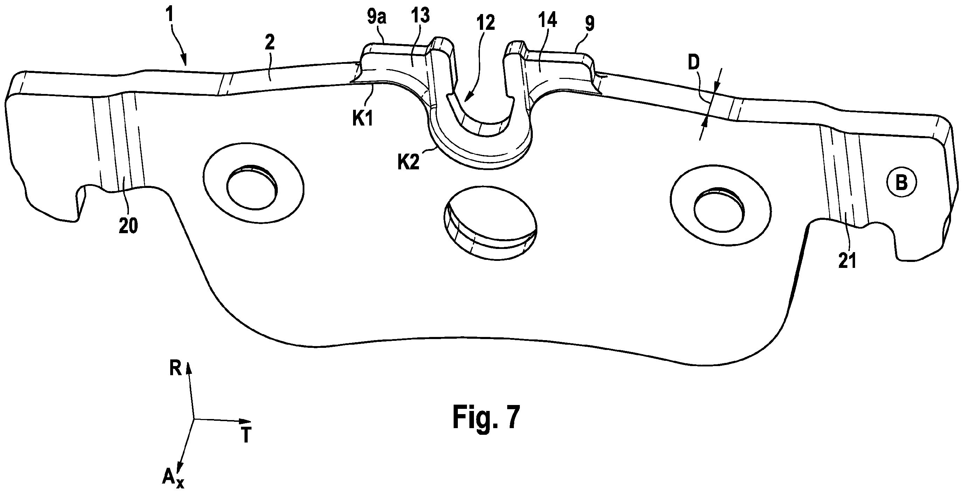

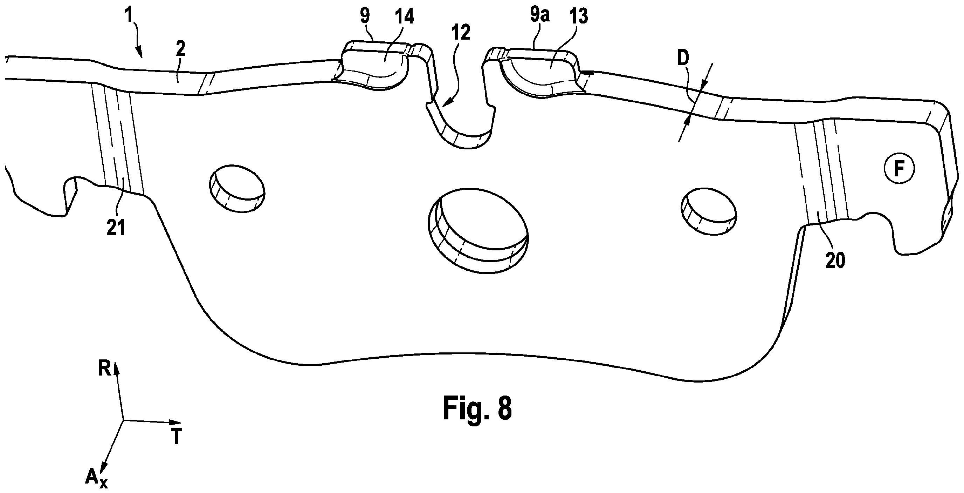

Die Drahtbügelfeder 4 ist in Seitenansicht (Fig. 6) zu einer radial gedachten Hochachse symmetrisch. Die Draufsicht (Fig. 5) auf die Drahtbügelfeder 4 zeigt, dass diese seitlich im Wesentlichen nicht über die Blechdicke D der Rückenplatte 2 hinausragt und zu der Längsachse L asymmetrisch ausgebildet ist. Die axial verdichtete Bauweise stellt sicher, dass es nicht zu irgendwelchen Kontakten oder Reibvorgängen zwischen Drahtbügelfeder 4 und Bremsscheibe oder Bremskolben kommen kann. Diese asymmetrisch gebogen ausgebildete Drahtbügelfeder 4, ermöglicht zusammen mit Ihrer entsprechend asymmetrisch angepassten Aufnahme an der Rückenplatte 2 weiterhin zwangsläufig eine fehlervermeidende, lagerichtige Montage, wie anhand des U-Schenkels 17,18 nachstehend erläutert wird.

Die Auflagepunkte von den Federschenkeln 5,6 zur elastischen Anlage an einer Gehäusebrücke sind bei den in den Vorsprüngen 20,21 doppelt abgekröpft ausgebildeten Rückenplatten 2 so arrangiert, dass diese in einer zentrischen Flucht mit der zugeordneten Lagerung und Auflage der Rückenplatte 2 im Bremshalter platziert sind. Dadurch wird der Vorteil erzielt, dass eine ideale, kippmomentenfreie, sowie radial gerichtete, Vorspannwirkung auf die Reibbeläge 1 ermöglicht wird. Mit anderen Worten wird Kipptendenz sowie Schrägverschleiß vermieden.

Der zentrale Mittelabschnitt (U-Bügel 15) der Drahtbügelfeder 4 ist nach radial auswärts offen und im Wesentlichen U-förmig gebogen ausgebildet. Der U-Bügel 15 umfasst U-Boden 16 und U-Schenkel 17, 18, welche die beiden entgegengesetzt gerichteten Federschenkel 5,6 samt Federwicklung 7,8 unter einem vorgegebenen Abstand miteinander verbinden. Ein wesentlicher Vorteil dieser Drahtbügelfeder 4 besteht darin, dass diese vor der Reibbelag-Verschleißsensormontage an dem Reibbelag 1 befestigbar ist, so dass eine nachträgliche Sensormontage nicht behindert wird. Denn die Drahtbügelfeder 4 folgt in Ihrer konkreten Ausbildung der U-Schenkel 17,18 im weitesten Sinne einer Außenkontur vom Gehäuse von dem jeweiligen Reibbelag-Verschleißsensor 19, so dass dieser sicher aufgenommen und problemlos, auch in Radialrichtung, in seine Aufnahme an der Rückenplatte 2 eingeschoben werden kann, ohne die Drahtbügelfeder 4 entfernen oder deformieren zu müssen. Gemeinsam mit der besonders geformten Kontur der U-Schenkel 17,18 der Drahtbügelfeder 4 ermöglicht dies, in Abstimmung mit einer Außenkontur von dem zugeordneten Gehäuse vom Reibbelag-Verschleißsensor 19, eine lagerichtige Montage vom Reibbelag-Verschleißsensor 19. Die - in Draufsicht - asymmetrische Anordnung der U-Schenkel 17,18 ermöglicht zusammen mit der zugeordneten Aufnahme an der Rückenplatte 2 eine fehlervermeidende Montage. Denn eine lageverkehrte Paarung zwischen Reibbelag 1 und Drahtbügelfeder 4 ist konstruktiv, also automatisch, sicher ausgeschlossen.

Die Drahtbügelfeder 4 kann punktuell und/oder flächig über Radien an Aufnahme 12/Sitz der als Gegenstück gestalteten Rückenplatte 2 abgestützt sein. Dazu verfügt die Drahtbügelfeder 4 über wenigstens drei Biegeradien, denen entsprechende Gegenstücke in der Aufnahme 12 zur Krafteinleitung zugeordnet sind. Die elastische Deformation der Federschenkel 5,6 in der Radialrichtung R ermöglicht eine zwangsläufige kraftschlüssige Sicherung in der Aufnahme 12. In Weiterbildung der Erfindung kann an der Rückenplatte 2 vorgesehen sein, dass der Sitz 13,14 eine vertiefte Aufnahme für den U-Schenkel 17, 18 mit einer Hinterschneidung aufweist. Wenn die U-Schenkel 17, 18 antiparallel zueinander ausgerichtet sind, indem eine elastische, omegaförmige Überbiegung der beiden U-Schenkel 17,18 in Tangentialrichtung T vorliegt, kann dadurch eine zusätzliche Haltewirkung gegen unerwünschten Abzug der Drahtbügelfeder 4 ermöglicht werden. Die bevorzugte Ausführungsform zeigt in der Figur, dass der Sitz 13,14 auf der reibbelagabgewandten Rückseite B der Rückenplatte 2 im Bereich K1 konvex geformt ist, um die S-Krümmung der Drahtbügelfeder 4 zu unterstützen. Demgegenüber sind die Biegungen der Federwicklungen 7,8 auf der reibbelagzugewandten Vorderseite F der Rückenplatte 2 im Bereich K2 der Sitze 13, 14 in konkaven Ausformungen aufgenommen.

Erfindungsgemäß ist eine vormontierte und verliergesicherte Zulieferbaugruppe umfassend Reibbelag 1 mit Radialbefederung einschließlich Mehrwertfunktion ermöglicht, indem gleichzeitig eine nachträgliche und vereinfachte, radial gerichtete, fehlerbefreite Montage vom Verschleißsensor 19 vorgesehen ist. Dies ermöglicht für Zulieferunternehmen, Fahrzeughersteller, Verschleißteilmarkt, wie auch für die Wartung im Fahrzeugfeld eine vereinfachte Logistik und Montage.

Der U-Bügel 15 mit U-Schenkeln 17,18 ermöglicht eine stabile, flächige Befestigung und Auflage für eine kippsichere Abstützung der Drahtbügelfeder 4 an der Rückenplatte 2 in Relation zu den verschiedenen Raumachsen.

Es versteht sich, dass die Rückenplatte 2 zur Aufnahme von Reibbelag-Verschleißsensor 19 und Drahtbügelfeder 4 entsprechend angepasste Aufnahmen 12 sowie Nocken 9,9a/Sitze 13,14, Befestigungsabschnitte aufweist. Dazu gehört insbesondere eine entsprechend in der Blechdicke ausgesparte Aufnahme 12 für den U-Bügel 15 mit U-Schenkeln 17, 18. Weiterhin empfehlenswert sind - in deren Dicke nach Bedarf abgestreckt, reduziert vorgesehene - Sitze 13, 14 für die Federwicklungen 7,8. Diese Sitze 13,14 sind zumindest teilweise Bestandteil von Nocken 9,9a die über die Kontur vom Reibwerkstoff 3 nach radial außen überstehen.

Es ist hinzuzufügen, dass den Federwicklungen 7,8 selbstverständlich ausreichend Freiraum im Bereich der Sitze eingeräumt ist, damit eine elastische Deformation der Federschenkel 5,6 ohne Behinderung ausgeführt werden kann.

### Bezugszeichenliste

- 1: Reibbelag
- 2: Rückenplatte
- 3: Reibwerkstoff
- 4: Drahtbügelfeder
- 5: Federschenkel
- 6: Federschenkel
- 7: Federwicklung
- 8: Federwicklung
- 9,9a: Nocken
- 10: Wicklungsmittelpunkt
- 11: Wicklungsmittelpunkt
- 12: Aufnahme
- 13: Sitz
- 14: Sitz
- 15: U-Bügel
- 16: U-Boden
- 17: U-Schenkel
- 18: U-Schenkel
- 19: (Reibbelag-)Verschleißsensor
- 20: Vorsprung
- 21: Vorsprung

- S,S': Krümmung
- P: Steigung
- D: Blechdicke
- L: Längsachse
- Q: Querachse
- Ax: Axialrichtung (parallel zur Bremsscheibendrehachse)
- R: Radialrichtung
- T: Tangentialrichtung
- K1: Bereich
- K2: Bereich
- F: Vorderseite (reibbelagseitig)
- B: Rückseite (reibbelagabgewandt)

## Patentansprüche

1. Reibbelag (1) mit einer Drahtbügelfeder (4), die mit Federschenkeln (5, 6) zur radial elastischen Abstützung des Reibbelags (1) an einer Gehäusebrücke eines Bremssattels dient, wobei die Drahtbügelfeder (4) an einer Rückenplatte (2) des Reibbelags (1) befestigt ist, und wobei die Rückenplatte (2) weiterhin eine Aufnahme (12) für einen Reibbelag-Verschleißsensor (19) zur Verschleißerfassung bei einer Kraftfahrzeug-Teilbelag-Scheibenbremse aufweist, die Drahtbügelfeder (4) in Relation zu wenigstens einer gedachten Längsachse asymmetrisch ausgebildet ist, dass die Drahtbügelfeder (4) in Relation zu wenigstens einer um 90° verdreht zu der Längsachse L angeordnet gedachten Querachse Q symmetrisch ausgebildet ist, **dadurch gekennzeichnet, dass** die Drahtbügelfeder (4) einen zentralen U-Bügel (15) zur Aufnahme von dem Reibbelag-Verschleißsensor (19) aufweist, und wobei der U-Bügel (19) derart oben offen ausgebildet ist, dass der Reibbelag-Verschleißsensor (19) in dem zentralen U-Bügel (19) integriert aufgenommen ist, und wobei der U-Bügel (19) im Wesentlichen größer als der Reibbelag-Verschleißsensor (19) vorgesehen ist, so dass der Reibbelag-Verschleißsensor (19 in Radialrichtung (R) lagerichtig in der Aufnahme (12) der Rückenplatte (2) montierbar ist.

2. Reibbelag (1) mit einer Drahtbügelfeder (4) nach Patentanspruch 1, **dadurch gekennzeichnet, dass** jeder Federschenkel (5,6) über wenigstens eine gesonderte Federwicklung (7,8) an einen U-Schenkel (17,18) vom U-Bügel (19) angeschlossen ist.

3. Reibbelag (1) mit einer Drahtbügelfeder (4) nach Patentanspruch 2, **dadurch gekennzeichnet, dass** jeweils zwischen jedem Federschenkel (5,6) und jedem U-Schenkel (17,18) wenigstens eine Federwicklung (7,8) mit vorgegebener Steigung (P) und mit mehreren Windungen vorgesehen ist.

4. Reibbelag (1) mit einer Drahtbügelfeder (4) nach Patentanspruch 3, **dadurch gekennzeichnet, dass** die Federwicklungen (7,8) der Drahtbügelfeder (4) jeweils zueinander unterschiedlichen Drehsinn aufweisen.

5. Reibbelag (1) mit einer Drahtbügelfeder (4) nach einem oder mehreren der vorhergehenden Patentansprüche, **dadurch gekennzeichnet, dass** ein Stahldrahtbügel vorgesehen ist, der zwischen jeder Federwicklung (7,8) und jedem U-Schenkel (17,18) eine S-förmige Krümmung (S,S') aufweist.

6. Reibbelag (1) mit einer Drahtbügelfeder (4) nach Patentanspruch 5, **dadurch gekennzeichnet, dass** die S-förmige Krümmung (S,S') zumindest teilweise auf einem Sitz (13,14) von der Rückenplatte (2) aufsitzt.

7. Reibbelag (1) mit einer Drahtbügelfeder (4) nach Patentanspruch 6, **dadurch gekennzeichnet, dass** jeder Sitz (13,14) einen konkav geformten Bereich (K1) zur Aufnahme einer Federwicklung (7,8) und einen konvex geformten Bereich (K2) zur Abstützung der S-Krümmung (S,S') aufweist.

8. Reibbelag (1) mit einer Drahtbügelfeder (4), nach Patentanspruch 3 oder 4, **dadurch gekennzeichnet, dass** die Federwicklungen (7,8) mit einer axial gerichtet vorgegebenen Steigung (P) derart ausgebildet sind, dass benachbarte Wicklungsabschnitte ohne Anlage aneinander mit axialem Abstand zueinander vorgesehen sind.

9. Reibbelag (1) mit einer Drahtbügelfeder (4) nach Patentanspruch 8, **dadurch gekennzeichnet, dass** die Steigung (P) der Federwicklungen (7,8) derart vorgesehen ist, dass der Stahldrahtbügel in der Axialrichtung (Ax) im Wesentlichen nicht über die Dicke (D) der Rückenplatte (2) übersteht.

10. Reibbelag (1) mit einer Drahtbügelfeder (4) nach Patentanspruch 8 und 9, **dadurch gekennzeichnet, dass** die Rückenplatte (2) im Bereich der Sitze (13,14) mit einer Dicke (D) ausgebildet ist, welche geringfügig größer als der axiale Abstand zwischen benachbarten Wicklungsabschnitten dimensioniert ist, so dass jede Federwicklung (7,8) elastisch auf den zugehörigen Sitz (13,14) aufgespannt ist.

11. Reibbelag (1) mit einer Drahtbügelfeder (4) nach Patentanspruch 1, **dadurch gekennzeichnet, dass** jeder U-Bügel (15) auf einer reibbelagfreien Rückseite (R) von der Rückenplatte (2) angeordnet ist, und dass die Federschenkel (5,6) jeweils auf einer reibbelagseitigen Vorderseite (F) an den Federwicklungen (7,8) angeordnet sind.

12. Reibbelag (1) mit einer Drahtbügelfeder (4), nach Patentanspruch 1, **dadurch gekennzeichnet, dass** die beiden U-Schenkel (17,18) vom U-Bügel (15) derart antiparallel geneigt zueinander vorgesehen sind, dass die beiden U-Schenkel (17,18) im Bereich Ihres Übergangs zu der s-förmigen Krümmung einen geringeren Abstand zueinander aufweisen, als in einem Drahtbügelabschnitt der vor dem Übergang sowie näher an einem U-Boden (16) vorgesehen ist.

13. Reibbelag (1) mit einer Drahtbügelfeder (4) nach einem oder mehreren der vorhergehenden Patentansprüche, **dadurch gekennzeichnet, dass** die Drahtbügelfeder (4) und der Reibbelagverschleißsensor (19) unabhängig voneinander lösbar, insbesondere kraftschlüssig, an der Rückenplatte (2) befestigt sind.

## Claims

1. Friction lining (1) having a wire bow spring (4) which serves by way of spring legs (5, 6) for the radially elastic support of the friction lining (1) on a housing guide rail of a brake caliper, the wire bow spring (4) being fastened to a rear plate (2) of the friction lining (1), and, furthermore, the rear plate (2) having a receptacle (12) for a friction lining wear sensor (19) for wear detection in a motor vehicle partially lined disk brake, the wire bow spring (4) is of asymmetrical configuration in relation to at least one imaginary longitudinal axis, that the wire bow spring (4) is of symmetrical configuration in relation to at least one imaginary transverse axis Q which is arranged rotated by 90° with respect to the longitudinal axis L, **characterized in that** the wire bow spring (4) has a central U-bow (15) for receiving the friction lining wear sensor (19), and the U-bow (15) being configured so as to be open at the top in such a way that the friction lining wear sensor (19) is received in an integrated manner in the central U-bow (15), and the U-bow (15) being provided so as to be substantially larger than the friction lining wear sensor (19), with the result that the friction lining wear sensor (19) can be mounted in the receptacle (12) of the rear plate (2) in a positionally correct manner in the radial direction (R).

2. Friction lining (1) having a wire bow spring (4) according to Patent Claim 1, **characterized in that** each spring leg (5, 6) is connected via at least one separate spring winding (7, 8) to a U-limb (17, 18) of the U-bow (19).

3. Friction lining (1) having a wire bow spring (4) according to Patent Claim 2, **characterized in that** at least one spring winding (7, 8) with a predefined pitch (P) and with a plurality of windings is provided in each case between each spring leg (5, 6) and each U-limb (17, 18).

4. Friction lining (1) having a wire bow spring (4) according to Patent Claim 3, **characterized in that** the spring windings (7, 8) of the wire bow spring (4) in each case have a different rotational direction with respect to one another.

5. Friction lining (1) having a wire bow spring (4) according to one or more of the preceding patent claims, **characterized in that** a steel wire bow is provided which has an S-shaped curvature (S, S') between each spring winding (7, 8) and each U-limb (17, 18).

6. Friction lining (1) having a wire bow spring (4) according to Patent Claim 5, **characterized in that** the S-shaped curvature (S, S') is seated at least partially on a seat (13, 14) of the rear plate (2).

7. Friction lining (1) having a wire bow spring (4) according to Patent Claim 6, **characterized in that** each seat (13, 14) has a concavely shaped region (K1) for receiving a spring winding (7, 8) and a convexly shaped region (K2) for supporting the S-curvature (S, S').

8. Friction lining (1) having a wire bow spring (4) according to Patent Claim 3 or 4, **characterized in that** the spring windings (7, 8) are configured with a pitch (P), which is predefined in an axially directed manner, in such a way that adjacent winding sections are provided at an axial spacing from one another without contact with one another.

9. Friction lining (1) having a wire bow spring (4) according to Patent Claim 8, **characterized in that** the pitch (P) of the spring windings (7, 8) is provided in such a way that the steel wire bow substantially does not protrude in the axial direction (Ax) beyond the thickness (D) of the rear plate (2).

10. Friction lining (1) having a wire bow spring (4) according to Patent Claims 8 and 9, **characterized in that** the rear plate (2) is configured in the region of the seats (13, 14) with a thickness (D) which is dimensioned so as to be slightly greater than the axial spacing between adjacent winding sections, with the result that each spring winding (7, 8) is clamped elastically onto the associated seat (13, 14).

11. Friction lining (1) having a wire bow spring (4) according to Patent Claim 1, **characterized in that** each U-bow (15) is arranged on a friction lining-free rear side (R) of the rear plate (2), and **in that** the spring legs (5, 6) are arranged on the spring windings (7, 8) in each case on a friction lining-side front side (F).

12. Friction lining (1) having a wire bow spring (4) according to Patent Claim 1, **characterized in that** the two U-limbs (17, 18) of the U-bow (15) are provided so as to be inclined antiparallel with respect to one another in such a way that the two U-limbs (17, 18) are at a smaller spacing from one another in the region of their transition to the S-shaped curvature than in a wire bow section which is provided in front of the transition and closer to a U-base (16).

13. Friction lining (1) having a wire bow spring (4) according to one or more of the preceding patent claims, **characterized in that** the wire bow spring (4) and the friction lining wear sensor (19) are fastened to the rear plate (2) such that they can be released independently of one another, in particular in a non-positive manner.

## Revendications

1. Garniture de friction (1) pourvue d'un ressort en arceau en fil métallique (4), qui, au moyen de branches de ressort (5, 6), sert au support radialement élastique de la garniture de friction (1) sur un pont de boîtier d'un étrier de frein, le ressort en arceau en fil métallique (4) étant fixé à une plaque arrière (2) de la garniture de friction (1), et la plaque arrière (2) présentant en outre un logement (12) pour un capteur d'usure de garniture de friction (19) pour détecter l'usure dans le cas d'un frein à disques à garnitures partielles d'un véhicule automobile, le ressort en arceau en fil métallique (4) étant réalisé de manière asymétrique par rapport à au moins un axe longitudinal imaginaire, que le ressort en arceau en fil métallique (4) est réalisé de manière symétrique par rapport à au moins un axe transversal imaginaire Q tourné de 90° par rapport à l'axe longitudinal L, **caractérisée en ce que** le ressort en arceau en fil métallique (4) présente un arceau central en forme de U (15) pour recevoir le capteur d'usure de garniture de friction (19), et l'arceau en forme de U (19) étant réalisé de manière ouverte vers le haut de telle sorte que le capteur d'usure de garniture de friction (19) soit reçu de manière intégrée dans l'arceau central en forme de U (19), et l'arceau en forme de U (19) étant sensiblement plus grand que le capteur d'usure de garniture de friction (19) de telle sorte que le capteur d'usure de garniture de friction (19) puisse être monté dans la direction radiale (R) dans la position correcte dans le logement (12) de la plaque arrière (2).

2. Garniture de friction (1) comprenant un ressort en arceau en fil métallique (4) selon la revendication 1, **caractérisée en ce que** chaque branche de ressort (5, 6) est raccordée par le biais d'au moins un enroulement de ressort séparé (7, 8) à une branche du U (17, 18) de l'arceau en forme de U (19).

3. Garniture de friction (1) comprenant un ressort en arceau en fil métallique (4) selon la revendication 2, **caractérisée en ce qu'**au moins un enroulement de ressort (7, 8) avec un pas prédéfini (P) et avec plusieurs spires est prévu à chaque fois entre chaque branche de ressort (5, 6) et chaque branche du U (17, 18).

4. Garniture de friction (1) comprenant un ressort en arceau en fil métallique (4) selon la revendication 3, **caractérisée en ce que** les enroulements de ressort (7, 8) du ressort en arceau en fil métallique (4) présentent à chaque fois un sens de rotation différent les uns des autres.

5. Garniture de friction (1) comprenant un ressort en arceau en fil métallique (4) selon l'une quelconque ou plusieurs des revendications précédentes, **caractérisée en ce qu**'il est prévu un arceau en fil d'acier qui présente, entre chaque enroulement de ressort (7, 8) et chaque branche du U (17, 18), une courbure en forme de S (S, S').

6. Garniture de friction (1) comprenant un ressort en arceau en fil métallique (4) selon la revendication 5, **caractérisée en ce que** la courbure en forme de S (S, S') repose en partie sur un siège (13, 14) de la plaque arrière (2).

7. Garniture de friction (1) comprenant un ressort en arceau en fil métallique (4) selon la revendication 6, **caractérisée en ce que** chaque siège (13, 14) présente une région de forme concave (K1) pour recevoir un enroulement de ressort (7, 8) et une région de forme convexe (K2) pour supporter la courbure en S (S, S').

8. Garniture de friction (1) comprenant un ressort en arceau en fil métallique (4) selon la revendication 3 ou 4, **caractérisée en ce que** les enroulements de ressort (7, 8) sont réalisés avec un pas prédéfini (P) orienté axialement, de telle sorte que des portions d'enroulement adjacentes soient pourvues d'un espacement axial les unes des autres sans contact les unes avec les autres.

9. Garniture de friction (1) comprenant un ressort en arceau en fil métallique (4) selon la revendication 8, **caractérisée en ce que** le pas (P) des enroulements de ressort (7, 8) est prévu de telle sorte que l'arceau en fil d'acier ne dépasse sensiblement pas au-delà de l'épaisseur (D) de la plaque arrière (2) dans la direction axiale (Ax).

10. Garniture de friction (1) comprenant un ressort en arceau en fil métallique (4) selon les revendications 8 et 9, **caractérisée en ce que** la plaque arrière (2) est réalisée, dans la région des sièges (13, 14), avec une épaisseur (D) qui est dimensionnée de manière à être légèrement supérieure à la distance axiale entre des portions d'enroulement adjacentes de telle sorte que chaque enroulement de ressort (7, 8) soit tendu élastiquement sur le siège associé (13, 14).

11. Garniture de friction (1) comprenant un ressort en arceau en fil métallique (4) selon la revendication 1, **caractérisée en ce que** chaque arceau en U (15) est disposé sur un côté arrière (R) de la plaque arrière (2) exempt de garniture de friction et **en ce que** les branches de ressort (5, 6) sont à chaque fois disposées sur un côté avant (F) du côté de la garniture de friction au niveau des enroulements de ressort (7, 8).

12. Garniture de friction (1) comprenant un ressort en arceau en fil métallique (4) selon la revendication 1, **caractérisée en ce que** les deux branches du U (17, 18) de l'arceau en U (15) sont prévues de manière anti-parallèle et inclinée l'une par rapport à l'autre de telle sorte, que les deux branches du U (17, 18), dans la région de leur transition à la courbure en forme de s, présentent une plus petite distance l'une de l'autre que dans une portion d'arceau en fil métallique qui est prévue avant la transition ainsi que plus près d'un fond du U (16).

13. Garniture de friction (1) comprenant un ressort en arceau en fil métallique (4) selon l'une ou plusieurs des revendications précédentes, **caractérisée en ce que** le ressort en arceau en fil métallique (4) et le capteur d'usure de garniture de friction (19) sont fixés de manière détachable indépendamment l'un de l'autre, en particulier par engagement par force, à la plaque arrière (2).
